# EUROPEAN PATENT SPECIFICATION

(11) **EP 3 819 220 B1**
(45) Date of publication and mention of the grant of the patent: **22.03.2023**
(21) Application number: 20205731.1
(22) Date of filing: 04.11.2020
(51) Int. Cl.: B64D 29/00, B64D 33/02, B64D 15/12, B64D 15/20, B64C 7/02, B64D 15/00

(54) **THERMAL ANTI-ICING SYSTEM WITH MICROWAVE SYSTEM**
THERMISCHES VEREISUNGSSCHUTZSYSTEM MIT MIKROWELLENSYSTEM
SYSTÈME ANTIGIVRAGE THERMIQUE COMPRENANT UN SYSTÈME À MICRO-ONDES

(30) Priority: 05.11.2019 US 201916674278
(43) Date of publication of application: 12.05.2021
(73) Proprietor: Rohr, Inc., Chula Vista, CA 91910-2098 (US)
(72) Inventor: KESTLER, Steven M., San Diego, CA 92104 (US); MANTESE, Joseph V., Ellington, CT 06029 (US)
(74) Representative: Dehns

(56) References cited:
- DE-A1-102018 206 650
- GB-A- 2 563 271
- US-A- 4 060 212
- US-A- 4 365 131
- US-A1- 2003 015 524
- US-A1- 2003 052 230
- US-B1- 6 207 940
- US-B2- 7 087 876

## Description

### BACKGROUND

### 1. Technical Field

This disclosure relates generally to an aircraft system and, more particularly, to a thermal anti-icing system for an aircraft propulsion system.

### 2. Background Information

An aircraft propulsion system may include a thermal anti-icing system for melting ice accumulation on an inlet lip of a nacelle. Various thermal anti-icing systems are known in the art, which known systems include hot air systems and electrical resistance systems. While these known thermal anti-icing systems have various benefits, there is still room in the art for improvement. There is a need in the art therefore for an improved thermal anti-icing system for an aircraft propulsion system. DE102018206650A1 discloses a cover for an engine nacelle. GB2563271A, US6207940B1, US20030015524A1, US20030052230A1, US4365131A and US4060212A disclose de-icing systems for aircraft.

### SUMMARY OF THE DISCLOSURE

According to an aspect of the invention, an assembly for an aircraft propulsion system is provided according to claim 1.

The exterior skin may at least partially form an inlet lip of the nacelle inlet structure. The inlet lip may be configured with the dielectric material.

The exterior skin may at least partially form an inner lip skin of the nacelle inlet structure. The inner lip skin may be configured with the dielectric material.

The exterior skin may at least partially form an outer lip skin of the nacelle inlet structure. The outer lip skin may be configured with the dielectric material.

The plurality of inserts may be arranged into a plurality of arrays.

A first of the plurality of arrays may include a first set of the plurality of inserts. A second of the plurality of arrays may include a second set of the plurality of inserts. The second set of the plurality of inserts may be circumferentially offset from the first set of the plurality of inserts about the centerline.

A first of the plurality of arrays may include a first set of the plurality of inserts. A second of the plurality of arrays may include a second set of the plurality of inserts. The second set of the plurality of inserts may be axially offset from the first set of the plurality of inserts along the centerline.

The dielectric material may be configured into an annular band.

The annular band may be located at an axially forwardmost point of the nacelle inlet structure.

The nacelle inlet structure may be configured with an internal cavity at least partially formed by the exterior skin. The microwave system may include a waveguide within the internal cavity. The waveguide may be configured to direct the microwaves to the dielectric material.

The microwaves may be transmitted at a frequency between one and ten gigahertz.

The dielectric material may include alumina, silica and/or a fluoropolymer.

The microwave system may be configured to generate the microwaves in pulses.

The microwave system may include a coax transmission line waveguide.

The microwave system may include a waveguide comprising a fluoropolymer.

The microwave system may include a microwave source configured as a magnetron, a klystron, a gyrotron or a solid state source.

The assembly may also include a sensing system configured to detect presence of ice based on a sensed parameter associated with the microwaves.

The present disclosure may include one or more of the features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side illustration of an aircraft propulsion system.
FIG. 2 is a partial side sectional illustration of an assembly for the aircraft propulsion system.
FIG. 3 is a cross-sectional illustration of the aircraft propulsion system assembly.
FIG. 4 is a partial side sectional illustration of a thermal anti-icing system for preventing and/or melting ice accumulation on an exterior skin.
FIG. 5 is a partial side sectional illustration of the exterior skin and the thermal anti-icing system with an alternative microwave waveguide.
FIG. 6 is a schematic illustration of arrays of apertures and associated dielectric inserts.
FIG. 7 is a schematic illustration of a portion of the arrays of apertures and associated dielectric inserts.
FIG. 8 is a partial illustration of the exterior configured with an annular aperture and associate dielectric insert.
FIG. 9 is a block diagram of the thermal anti-icing system with a sensing system.
FIG. 10 is a block diagram of a waveguide in communication with an antenna structure.

### DETAILED DESCRIPTION

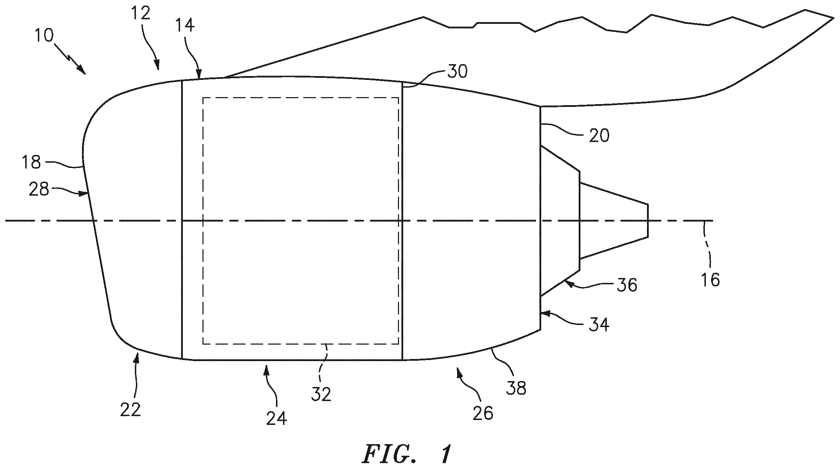

FIG. 1 illustrates an aircraft propulsion system 10 for an aircraft such as, but not limited to, a commercial airliner or a cargo plane. The propulsion system 10 includes a nacelle 12 and a gas turbine engine. This gas turbine engine may be configured as a high-bypass turbofan engine. Alternatively, the gas turbine engine may be configured as any other type of gas turbine engine capable of propelling the aircraft during flight.

The nacelle 12 is configured to house and provide an aerodynamic cover for the gas turbine engine. An outer structure 14 of the nacelle 12 extends along an axial centerline 16 of the gas turbine engine between a nacelle forward end 18 and a nacelle aft end 20. The outer structure 14 of FIG. 1 includes a nacelle inlet structure 22, one or more fan cowls 24 (one such cowl visible in FIG. 1) and a nacelle aft structure 26, which may be configured as part of or include a thrust reverser system.

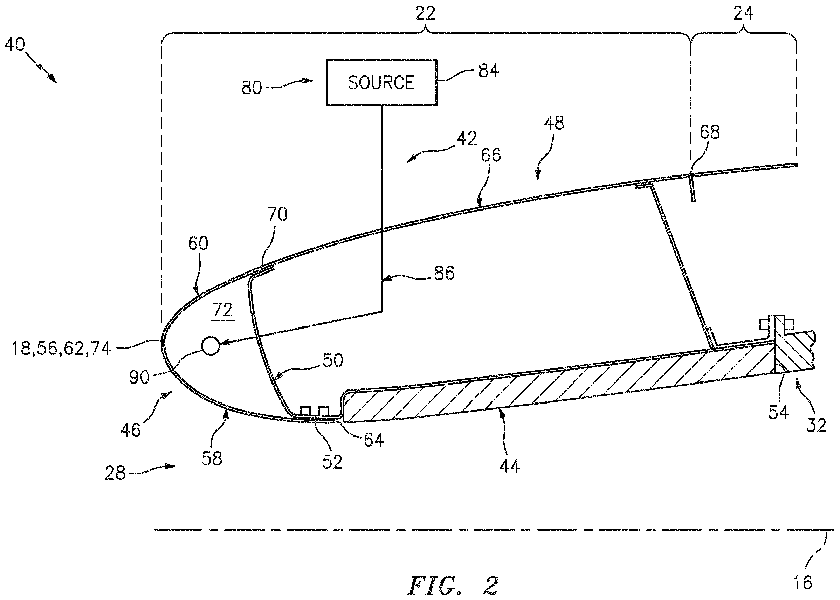

As described below in further detail, the inlet structure 22 is disposed at the nacelle forward end 18. The inlet structure 22 is configured to direct a stream of air through an inlet opening 28 (see also FIG. 2) at the nacelle forward end 18 and into a fan section of the gas turbine engine.

The fan cowls 24 are disposed axially between the inlet structure 22 and the aft structure 26. Each fan cowl 24 of FIG. 1, in particular, is disposed at an aft end 30 of a stationary portion of the nacelle 12, and extends forward to the inlet structure 22. Each fan cowl 24 is generally axially aligned with a fan section of the gas turbine engine. The fan cowls 24 are configured to provide an aerodynamic covering for a fan case 32, which circumscribes the fan section and may partially form an outer peripheral boundary of a bypass flowpath of the propulsion system 10.

The term "stationary portion" is used above to describe a portion of the nacelle 12 that is stationary during propulsion system operation (e.g., during takeoff, aircraft flight and landing). However, the stationary portion may be otherwise movable for propulsion system inspection / maintenance; e.g., when the propulsion system 10 is non-operational. Each of the fan cowls 24, for example, may be configured to provide access to components of the gas turbine engine such as the fan case 32 and/or peripheral equipment configured therewith for inspection, maintenance and/or otherwise. In particular, each of the fan cowls 24 may be pivotally mounted with the aircraft propulsion system 10 by, for example, a pivoting hinge system. The present disclosure, of course, is not limited to the foregoing fan cowl configurations and/or access schemes.

The aft structure 26 of FIG. 1 is disposed at the nacelle aft end 20. The aft structure 26 is configured to form a bypass nozzle 34 for the bypass flowpath with an inner structure 36 of the nacelle 12; e.g., an inner fixed structure (IFS). The aft structure 26 may include one or more translating sleeves 38 (one such sleeve visible in FIG. 1) for the thrust reverser system. The present disclosure, however, is not limited to such a translatable sleeve thrust reverser system, or to an aircraft propulsion system with a thrust reverser system.

FIG. 2 is a schematic side sectional illustration of an assembly 40 of the propulsion system 10 of FIG. 1. This propulsion system assembly 40 includes the inlet structure 22, the fan cowls 24 (one shown) and the fan case 32. The propulsion system assembly 40 also includes a thermal anti-icing system 42.

The inlet structure 22 in FIG. 2 includes a tubular inner barrel 44, an annular inlet lip 46 (e.g., nose lip), a tubular outer barrel 48 and at least one forward (e.g., annular) bulkhead 50. The inlet structure 22 of FIG. 2 also configured with one or more components of the thermal anti-icing system 42.

The inner barrel 44 extends circumferentially around the axial centerline 16. The inner barrel 44 extends axially along the axial centerline 16 between an inner barrel forward end 52 and an inner barrel aft end 54. The inner barrel 44 may be configured to attenuate noise generated during propulsion system operation and, more particularly for example, noise generated by rotation of the fan. The inner barrel 44 of FIG. 2, for example, includes at least one tubular acoustic panel or an array of arcuate acoustic panels arranged around the axial centerline 16. Each acoustic panel may include a porous (e.g., honeycomb) core bonded between a perforated face sheet and a non-perforated back sheet, where the perforated face sheet faces radially inward and provides an outer boundary for an axial portion of the gas path. Of course, various other acoustic panel types and configurations are known in the art, and the present disclosure is not limited to any particular ones thereof.

The inlet lip 46 forms a leading edge 56 of the nacelle 12 as well as the inlet opening 28 to the fan section of the gas turbine engine. The inlet lip 46 has a cupped (e.g., generally U-shaped) cross-sectional geometry, which extends circumferentially as an annulus around the axial centerline 16. The inlet lip 46 includes an inner lip skin 58 and an outer lip skin 60, which skins 58 and 60 may (or may not) be formed together from a generally contiguous sheet material. Examples of such sheet material include, but are not limited to, metal (e.g., aluminum (Al) or titanium (Ti) sheet metal) and/or dielectric material (e.g., alumina, silica or fluoropolymer).

The inner lip skin 58 extends axially from an intersection with the outer lip skin 60 at the nacelle forward end 18 to the inner barrel 44, which intersection may be at an axially forwardmost point 62 (e.g., a flow stagnation point) on the inlet lip 46. An aft end 64 of the inner lip skin 58 is attached to the forward end 52 of the inner barrel 44 with, for example, one or more fasteners; e.g., rivets, bolts, etc. The inner lip skin 58 may also or alternatively be bonded (e.g., welded, brazed, adhered, etc.) to the inner barrel 44. Of course, the present disclosure is not limited to any particular attachment techniques between the inlet lip 46 and the inner barrel 44.

The outer lip skin 60 extends axially from the intersection with the inner lip skin 58 at the nacelle forward end 18 to the outer barrel 48.

The outer barrel 48 has a tubular outer barrel skin 66 that extends circumferentially around the axial centerline 16. The outer barrel skin 66 extends axially along the axial centerline 16 between the inlet lip 46 and, more particularly, the outer lip skin 60 and an aft end 68 of the outer barrel 48.

The outer barrel 48 and its skin 66 may be formed integrally with the outer lip skin 60 and, more particularly, the entire inlet lip 46 as shown in FIG. 2. The inlet lip 46 and the outer barrel 48, for example, may be formed from a monolithic exterior skin such as, for example, a formed piece of sheet metal and/or dielectric material. Such a monolithic exterior skin may extend longitudinally from the aft end 64 of the inner lip skin 58 to the aft end 68 of the outer barrel 48. This monolithic exterior skin therefore integrally includes the inner lip skin 58, the outer lip skin 60 as well as the outer barrel skin 66. In such embodiments, the monolithic skin may be formed as a full hoop body, or circumferentially segmented into arcuate (e.g., circumferentially extending) bodies which are attached in a side-by-side fashion circumferentially about the axial centerline 16. The present disclosure, however, is not limited to such exemplary configurations. For example, in other embodiments, the inlet lip 46 may be formed discrete from the outer barrel 48 where the outer lip skin 60 is discrete from the outer barrel skin 66. In such embodiments, the outer lip skin 60 may meet the outer barrel skin 66 at an interface with the forward bulkhead 50 at, for example, a point 70.

The forward bulkhead 50 is configured with the inlet lip 46 to form an internal forward cavity 72 (e.g., annular D-duct) within the inlet lip 46. The forward bulkhead 50 of FIG. 2, in particular, is axially located approximately at (e.g., proximate, adjacent or on) the aft end 64 of the inlet lip 46. The forward bulkhead 50 may be configured as a substantially annular body, which may be continuous or circumferentially segmented. The forward bulkhead 50 is attached to and extends radially between the inner lip skin 58 and the outer lip skin 60. The forward bulkhead 50 may be mechanically fastened to the inlet lip 46 with one or more fasteners. The forward bulkhead 50 may also or alternatively be bonded and/or otherwise connected to the inlet lip 46.

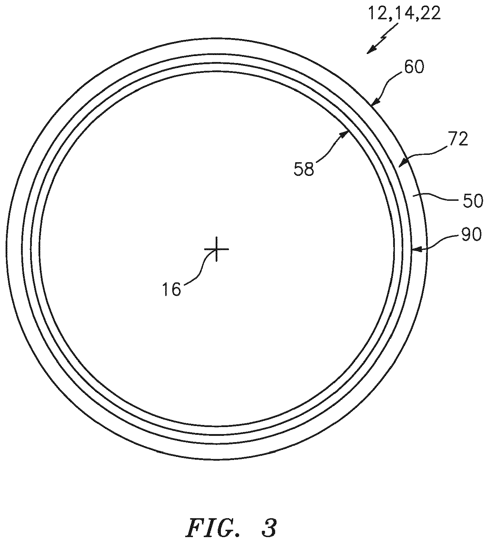

The cavity 72 extends axially within the inlet lip 46 from a forward end 74 of the inlet lip 46 (e.g., at the point 62) to the forward bulkhead 50. The cavity 72 extends radially within the inlet lip 46 from the inner lip skin 58 to the outer lip skin 60. Referring to FIG. 3, the cavity 72 also extends circumferentially about (e.g., completely around) the axial centerline 16.

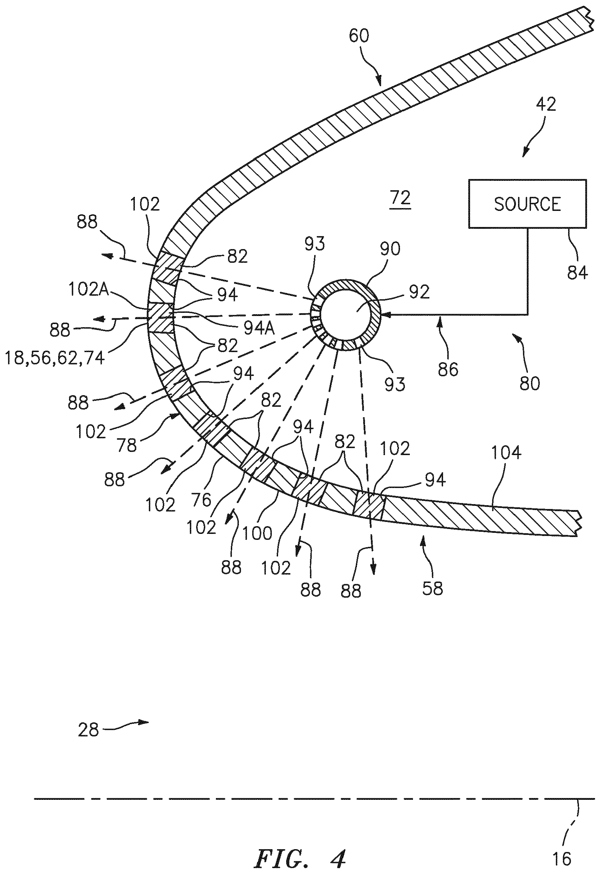

Referring to FIG. 4, the thermal anti-icing system 42 is configured to melt and/or prevent ice accumulation on an exterior surface 76 of an exterior skin 78 of the inlet structure 22; e.g., exterior surfaces of the inner lip skin 58 and/or the outer lip skin 60. The thermal anti-icing system 42 of FIG. 4 includes a microwave system 80 and dielectric material 82 (e.g., alumina, silica or fluoropolymer).

The microwave system 80 includes a microwave source 84 and a microwave transmission system 86. The microwave source 84 may be configured to generate microwaves 88 at a frequency of, for example, between 2.3 gigahertz (GHz) and 2.6 gigahertz; e.g., at exactly or about (e.g., +/- 0.01 or 0.02) 2.45 gigahertz (GHz). Of course, in other embodiments, the microwave source 84 may generate the microwaves 88 at a frequency at or above 2.6 gigahertz. In still other embodiments, the microwave source 84 may generate the microwaves 88 at a frequency at or below 2.3 gigahertz. For example, the microwave source 84 may be configured to generate microwaves 88 at a frequency between one and ten gigahertz, or between one and three gigahertz, or between 2.2 and 2.7 gigahertz.

The microwave source 84 may be configured as or otherwise include a vacuum electron device (VED) such as, but not limited to, a magnetron, a klystron and a gyrotron. The microwave source 84 may alternatively be configured as or otherwise include a solid state device; e.g., a solid state microwave source. Such a solid state device may include a radiofrequency (RF) transistor configured to generate the microwaves 88.

It is worth noting, the inventors of the present disclosure have found, generally speaking, a solid state device may have various advantages over a vacuum electron device. For example, a solid state device may require less (e.g., 10-100x less) operational power than a vacuum electron device; e.g., 20-50 volts versus 4000 volts. A solid state device may have a longer useful lifetime than a vacuum electron device; e.g., 15-20 plus years versus 500-1000 hours. A solid state device may have a lower mass and, thus, weigh less than a vacuum electron device. A solid state device may have improved control over a vacuum electron device.

In some embodiments, the microwave source 84 may be configured to generate a continuous output (e.g., stream) of the microwaves 88. In other embodiments, the microwave source 84 may be configured to generate an intermittent (e.g., pulsed) output of the microwaves 88.

The microwave transmission system 86 is configured to transmit the microwaves 88 generated by the microwave source 84 to a desired location or locations within the nacelle 12 and, more particularly, within the inlet structure 22; e.g., within the forward cavity 72. The microwave transmission system 86 is further configured to selectively direct the microwaves 88 at / to the dielectric material 82 as described below in further detail.

The microwave transmission system 86 of FIGS. 3 and 4 is configured as or otherwise includes a microwave waveguide 90; e.g., an electromagnetic feed line. The microwave waveguide 90 is arranged near the exterior skin 78. The microwave waveguide 90 of FIG. 4, for example, is arranged at least partially (or completely) within the forward cavity 72. This microwave waveguide 90 may include a tubular body with an internal passage 92 (e.g., bore) configured for communicating the microwaves 88. The microwave waveguide 90 of FIG. 3 extends within the forward cavity 72 circumferentially about (e.g., completely around or nearly (e.g., 70-95%) around) the axial centerline 16. The microwave waveguide 90 may be disposed radially and/or axially intermediately within the forward cavity 72 as shown in FIG. 4. With such a configuration, the microwave waveguide 90 may be physically separated from the exterior skin 78; e.g., disposed a non-zero distance away from the exterior skin 78.

The microwave waveguide 90 of FIG. 4 includes one or more apertures 93; e.g., slits and/or perforations. Each of these apertures 93 extends through / pierces a sidewall of the microwave waveguide 90. Each of these apertures 93 is thereby operable to direct the some of the microwaves 88 from within its internal passage 92 towards / to the dielectric material 82.

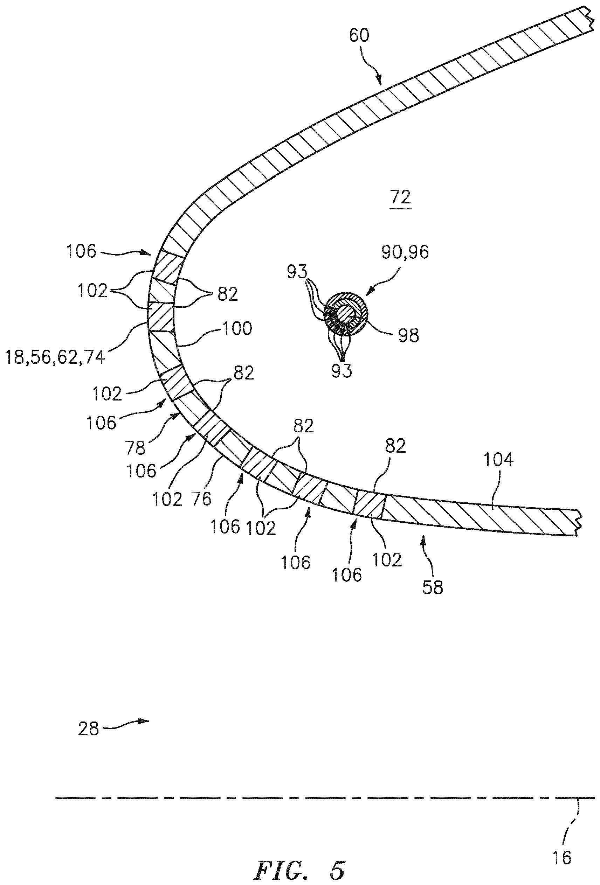

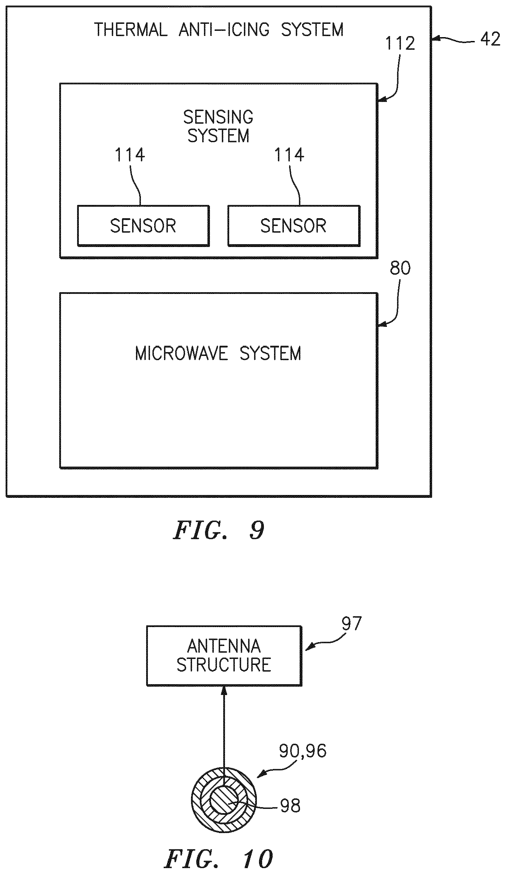

Referring to FIG. 5, the microwave waveguide 90 may alternatively be configured as or otherwise include a dielectric waveguide 96. This dielectric waveguide 96 may include an insulated solid dielectric rod 98 for transmission of the microwaves 88 rather than an internal passage. Examples of such a dielectric waveguide include, but are not limited to, an optical fiber, a microstrip, a coplanar waveguide, a stripline and a coaxial cable. The dielectric waveguide 96 may be constructed from or otherwise include a fluoropolymer such as, but not limited to, polytetrafluoroethylene (PTFE) (e.g., Teflon^{®} material) or polyvinylidene fluoride (PVDF). The dielectric waveguide 96 may also or alternatively include other polymeric materials and/or ceramics. The dielectric waveguide 96 may include one or more of the apertures 93 for directing the microwaves 88 from the insulated solid dielectric rod 98 towards / to the dielectric material 82. Alternatively, the dielectric waveguide 96 may be configured with (e.g., in microwave communication with) an antenna structure 97 (e.g., see FIG. 10), or with multiple of antenna structures 97. An example of the antenna structure 97 is a short metal stub operable to inject the microwaves into a region at the leading edge. Other examples of the antenna structure 97 include, but are not limited to, a patch antenna and a directional antenna.

The tubular waveguide (see FIG. 4) and/or insulation for the dielectric waveguide 96 (see FIG. 5) may be constructed from or otherwise include a microwave resistive material such as, but not limited to, metal or alumina (e.g., Al₂O₃) or silica (e.g., SiOs).

Referring to FIG. 4, the dielectric material 82 may be configured with (e.g., into / as a part of) the exterior skin 78 so as to at least partially form one or more portions of the exterior skin 78 as well as the exterior surface 76 and/or an interior surface 100 of that skin 78. The dielectric material 82 is configured as a plurality of dielectric inserts 102. Each of these inserts 102 is mated with (e.g., inserted into) a respective aperture 94 (e.g., perforation and/or slot) in a base 104 of the exterior skin 78, where the exterior skin base 104 may be configured as an apertured (e.g., perforated and/or slotted) sheet of non-dielectric material; e.g., metal. The exterior surface 76 and/or the interior surface 100 of the exterior skin 78 is thereby formed by both the dielectric material 82 as well as the exterior skin base material. The dielectric material 82 may have a surface density that is (e.g., 2x, 4x, 6x, 8x to 10x, 15x, 20x or more) less than a surface density of the exterior skin base material; e.g., the dielectric material surface density may be 2-20x less than the exterior surface base material surface density. The present disclosure, of course, is not limited to the foregoing exemplary surface density ratio. The term "surface density" may describe a density of surface area formed by a material within a unit of area; e.g., 6,45 square centimeter (one square inch).

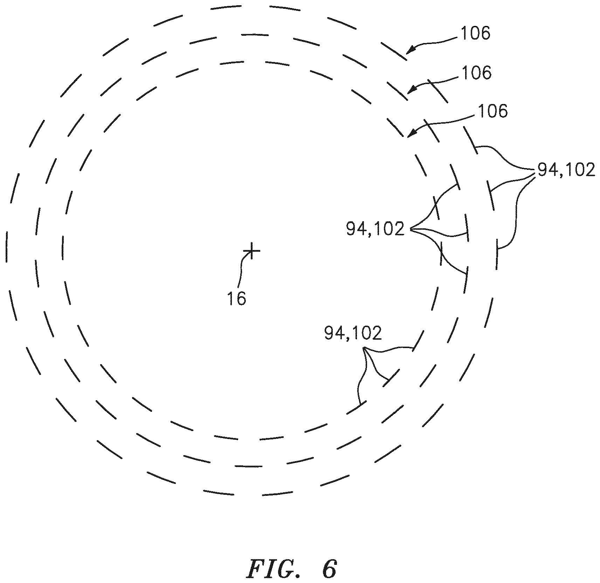

Referring to FIG. 5, the inserts 102 and the associated apertures 94 may be arranged into one or more arrays 106; e.g., annular and/or arcuate arrays. Referring to FIGS. 5 and 6, each array 106 may include one or more (e.g., a set) of the inserts 102 and the apertures 94, where these elements 94, 102 may be distributed (e.g., spaced) circumferentially about the centerline 16. The arrays 106 may be longitudinally (e.g., axially and/or radially) distributed relative to the exterior skin 78. With such an arrangement, the elements 94, 102 in each array 106 are longitudinally spaced from the elements 94, 102 in a longitudinally adjacent array 106 along the exterior skin 78. Referring to FIG. 6, the elements 94, 102 in at least one of the arrays 106 may also be laterally (e.g., circumferentially) offset from the elements 94, 102 in a longitudinally adjacent array 106. For example, centers of two nearby elements 94, 102 may be circumferentially offset such that, for example, those elements 94, 102 do not (or only partially) laterally overlap.

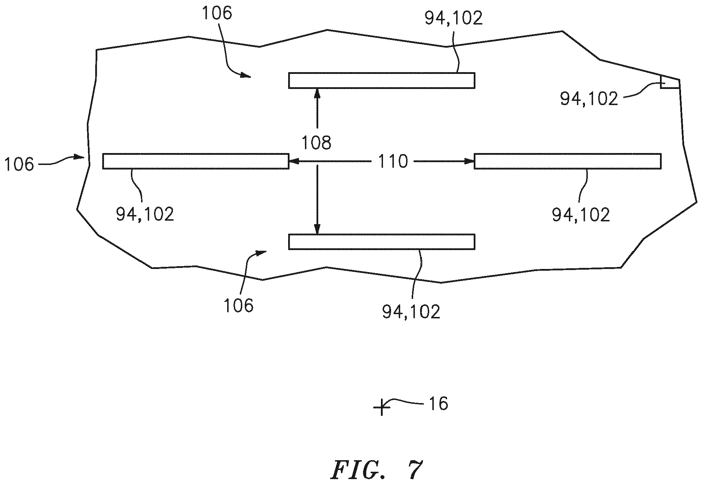

Referring to FIG. 7, at least some of the elements 94, 102 in neighboring arrays 106 may be arranged to provide a spacing (e.g., central base material area) between laterally and/or longitudinally adjacent elements 94, 102. For example, laterally aligned, but longitudinally offset elements 94, 102 may be separated by a longitudinal distance 108; e.g., exactly or about (e.g., +/-5-10%) 2,54 centimeter (one inch).

Longitudinally aligned, but laterally offset elements 94, 102 may be separated by a lateral distance 110; e.g., exactly or about (e.g., +/-5-10%) 2,54 centimeter (one inch). The longitudinal distance 108 may be equal to or different (e.g., greater or less) than the lateral distance 110.

One or more of the apertures 94 may each be configured as an (e.g., laterally and/or longitudinally) elongate aperture; e.g., a slit or a slot. The term "elongated aperture" may describe an aperture with a major axis and a minor axis. Examples of an elongated aperture include, but are not limited to, a rectangle, an oval, an ellipse, etc. Of course, in other embodiments, the aperture 94 may be non-elongated aperture. Examples of a non-elongated aperture include, but are not limited to, a square, a circle, etc.

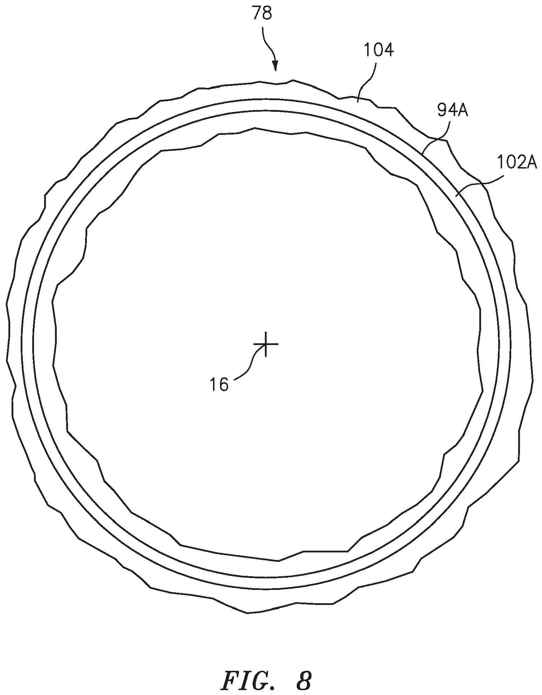

In some embodiments, referring to FIGS. 4 and 8, at least one of the elements 94A, 102A may be annular. The aperture 94A of FIG. 8, for example, is configured as an annular (e.g., ring-shaped) slot which is plugged by an annular (e.g., ring-shaped) insert 102A. Each element 94A, 102A may extend circumferentially about (e.g., completely around) the centerline 16. Referring to FIG. 4, this annular element 94A, 102A may be positioned at the axially forwardmost point 62 on the inlet lip 46. Thus, the annular element 94A, 102A may be positioned at a flow stagnation point on the inlet lip 46 where, for example, there is a higher likelihood of ice formation. Of course, such an annular element 94A, 102A may also or alternatively be positioned at other locations along the exterior skin 78.

During operation of the thermal anti-icing system 42 of FIG. 4, the microwave source 84 generates the microwaves 88. These microwaves 88 are received by the microwave waveguide 90. The microwave waveguide 90 selectively directs the received microwaves 88 towards / to the dielectric material 82. These transmitted microwaves 88 may pass through the dielectric material 82 and excite water / ice molecules on and/or near the exterior surface 76. This excitation may heat the water molecules and/or melt the ice molecules and thereby melt and/or prevent ice accumulation over and/or about the dielectric material 82. In addition, a force applied by fluid (e.g., air) moving at and/or along portions of ice formed on the exterior surface 76 proximate the dielectric material 82 may cause that ice to break away from the exterior skin 78.

In the embodiments described above, the exterior skin 78 is formed from both the dielectric material 82 via the inserts 102 and the exterior skin base material..

Referring to FIG. 9, in some embodiments, the propulsion system assembly 40 may include a sensing system 112. This sensing system 112 is configured to detect presence of ice on the exterior skin 78 and its exterior surface 76 (e.g., see FIGS. 4 and 5) based on a sensed parameter associated with the microwaves 88. For example, the sensing system 112 may include one or more sensors 114 that detect one or more parameters such as, but not limited to, standing wave ratio (SWR), return loss, reflection coefficient and/or reverse complex transmission coefficient (S12). Each of these parameters may relate to a ratio of incident to reflected power. When there is no ice present, the sensing system 112 may be optimized such that the reflected power is minimized. However, when ice is present with interfacial water or liquid water, one or more of the foregoing parameters may vary from a predetermined value or range and, thus, may be used in conjunction with air temperature to detect the presence of ice.

Detecting the presence of ice may enable the thermal anti-icing system 42 to be self-actuated and/or self-terminated. For example, when ice is detected on the exterior skin 78 and its exterior surface 76 by the sensing system 112 based on one or more of the afore-described parameters, the thermal anti-icing system 42 may be configured to turn on (e.g., power and/or activate) the microwave source 84 to generate microwaves for directing to the dielectric material 82 as described above. In this manner, the thermal anti-icing system 42 may be self-actuated via feedback from the sensing system 112. In addition or alternatively, when no ice is detected on the exterior skin 78 and its exterior surface 76 by the sensing system 112 based on one or more of the afore-described parameters, the thermal anti-icing system 42 may be configured to turn off the microwave source 84. In this manner, the thermal anti-icing system 42 may be self-terminated via feedback from the sensing system 112.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims.

## Claims

1. An assembly for an aircraft propulsion system, comprising:
a nacelle inlet structure (22) extending circumferentially about a centerline (16), the nacelle inlet structure (22) comprising an exterior skin (78), and the exterior skin (78) comprising dielectric material (82); and
a microwave system (80) configured to direct microwaves (88) to the dielectric material (82) for melting and/or preventing ice accumulation on the exterior skin (78); **characterised in that**
the exterior skin (78) comprises a base (104) and a plurality of inserts (102);
wherein the base (104) is configured with a plurality of apertures (94);
wherein each of the plurality of inserts (102) plugs a respective one of the plurality of apertures (94); and
wherein the plurality of inserts (102) comprise the dielectric material (82).

2. The assembly of claim 1, wherein the exterior skin (78) at least partially forms an inlet lip (46) of the nacelle inlet structure (22), and the inlet lip (46) is configured with the dielectric material (82).

3. The assembly of claim 1 or 2, wherein:
the exterior skin (78) at least partially forms an inner lip skin (58) of the nacelle inlet structure (22), and the inner lip skin (58) is configured with the dielectric material (82); and/or
the exterior skin (78) at least partially forms an outer lip skin (60) of the nacelle inlet structure (22), and the outer lip skin (60) is configured with the dielectric material (82).

4. The assembly of any preceding claim, wherein the plurality of inserts (102) are arranged into a plurality of arrays (106).

5. The assembly of claim 4, wherein:
a first of the plurality of arrays (106) includes a first set of the plurality of inserts (102);
a second of the plurality of arrays (106) includes a second set of the plurality of inserts (102); and
the second set of the plurality of inserts (102) are circumferentially offset from the first set of the plurality of inserts (102) about the centerline (16), and/or the second set of the plurality of inserts (102) are axially offset from the first set of the plurality of inserts (102) along the centerline (16).

6. The assembly of any preceding claim, wherein the dielectric material (82) is configured into an annular band (102A).

7. The assembly of claim 6, wherein the annular band (102A) is located at an axially forwardmost point of the nacelle inlet structure.

8. The assembly of any preceding claim, wherein:
the nacelle inlet structure (22) is configured with an internal cavity (72) at least partially formed by the exterior skin (78);
the microwave system (80) includes a waveguide (90) within the internal cavity (72); and
the waveguide (90) is configured to direct the microwaves (88) to the dielectric material (82).

9. The assembly of any preceding claim, wherein the microwaves (88) are transmitted at a frequency between one and ten gigahertz.

10. The assembly of any preceding claim, wherein the dielectric material (82) comprises at least one of alumina, silica or a fluoropolymer.

11. The assembly of any preceding claim, wherein the microwave system (80) is configured to generate the microwaves (88) in pulses.

12. The assembly of any preceding claim, wherein:
the microwave system (80) includes a coax transmission line waveguide (96); and/or
the microwave system (80) includes a or the waveguide (90, 96), and said waveguide comprises a fluoropolymer.

13. The assembly of any preceding claim, wherein the microwave system (80) comprises a microwave source (84) configured as a magnetron, a klystron, a gyrotron or a solid state source.

14. The assembly of any preceding claim, further comprising a sensing system (112) configured to detect presence of ice based on a sensed parameter associated with the microwaves (88).

15. The assembly of any preceding claim, wherein:
the nacelle inlet structure (22) comprises an exterior surface (76); and
the microwave system (80) is configured to direct microwaves (88) to the dielectric material for melting and/or preventing ice accumulation on the exterior surface (76).

## Patentansprüche

1. Baugruppe für ein Luftfahrzeugantriebssystem, umfassend:
eine Gondeleinlassstruktur (22), die sich in Umfangsrichtung um eine Mittellinie (16) erstreckt, wobei die Gondeleinlassstruktur (22) eine Außenhaut (78) umfasst und die Außenhaut (78) dielektrisches Material (82) umfasst; und
ein Mikrowellensystem (80), das dazu konfiguriert ist, Mikrowellen (88) zum Schmelzen und/oder Verhindern von Eisansammlung auf der Außenhaut (78) auf das dielektrische Material (82) zu richten; **dadurch gekennzeichnet, dass** die Außenhaut (78) eine Basis (104) und eine Vielzahl von Einsätzen (102) umfasst;
wobei die Basis (104) mit einer Vielzahl von Öffnungen (94) konfiguriert ist;
wobei jeder der Vielzahl von Einsätzen (102) eine jeweilige der Vielzahl von Öffnungen (94) verstopft; und
wobei die Vielzahl von Einsätzen (102) das dielektrische Material (82) umfasst.

2. Baugruppe nach Anspruch 1, wobei die Außenhaut (78) mindestens teilweise eine Einlasslippe (46) der Gondeleinlassstruktur (22) bildet und die Einlasslippe (46) mit dem dielektrischen Material (82) konfiguriert ist.

3. Baugruppe nach Anspruch 1 oder 2, wobei:
die Außenhaut (78) mindestens teilweise eine innere Lippenhaut (58) der Gondeleinlassstruktur (22) bildet und die innere Lippenhaut (58) mit dem dielektrischen Material (82) konfiguriert ist; und/oder
wobei die Außenhaut (78) mindestens teilweise eine äußere Lippenhaut (60) der Gondeleinlassstruktur (22) bildet und die äußere Lippenhaut (60) mit dem dielektrischen Material (82) konfiguriert ist.

4. Baugruppe nach einem der vorhergehenden Ansprüche, wobei die Vielzahl von Einsätzen (102) in einer Vielzahl von Anordnungen (106) angeordnet ist.

5. Baugruppe nach Anspruch 4, wobei:
eine erste der Vielzahl von Anordnungen (106) einen ersten Satz der Vielzahl von Einsätzen (102) beinhaltet;
eine zweite der Vielzahl von Anordnungen (106) einen zweiten Satz der Vielzahl von Einsätzen (102) beinhaltet; und
der zweite Satz der Vielzahl von Einsätzen (102) von dem ersten Satz der Vielzahl von Einsätzen (102) in Umfangsrichtung um die Mittellinie (16) versetzt ist, und/oder der zweite Satz der Vielzahl von Einsätzen (102) von dem ersten Satz der Vielzahl von Einsätzen (102) entlang der Mittellinie (16) axial versetzt ist.

6. Baugruppe nach einem der vorhergehenden Ansprüche, wobei das dielektrische Material (82) zu einem ringförmigen Band (102A) konfiguriert ist.

7. Baugruppe nach Anspruch 6, wobei das ringförmige Band (102A) an einem axial vordersten Punkt der Gondeleinlassstruktur angeordnet ist.

8. Baugruppe nach einem der vorhergehenden Ansprüche, wobei:
die Gondeleinlassstruktur (22) mit einem inneren Hohlraum (72) konfiguriert ist, der mindestens teilweise durch die Außenhaut (78) gebildet ist;
das Mikrowellensystem (80) einen Wellenleiter (90) innerhalb des inneren Hohlraums (72) beinhaltet; und
der Wellenleiter (90) dazu konfiguriert ist, die Mikrowellen (88) auf das dielektrische Material (82) zu richten.

9. Baugruppe nach einem der vorhergehenden Ansprüche, wobei die Mikrowellen (88) mit einer Frequenz zwischen einem und zehn Gigahertz übertragen werden.

10. Baugruppe nach einem der vorhergehenden Ansprüche, wobei das dielektrische Material (82) mindestens eines von Aluminiumoxid, Silica oder einem Fluorpolymer umfasst.

11. Baugruppe nach einem der vorhergehenden Ansprüche, wobei das Mikrowellensystem (80) dazu konfiguriert ist, die Mikrowellen (88) in Impulsen zu erzeugen.

12. Baugruppe nach einem der vorhergehenden Ansprüche, wobei:
das Mikrowellensystem (80) einen Koax-Übertragungsleitungswellenleiter (96) beinhaltet; und/oder das Mikrowellensystem (80) einen oder den Wellenleiter (90, 96) beinhaltet und der Wellenleiter ein Fluorpolymer umfasst.

13. Baugruppe nach einem der vorhergehenden Ansprüche, wobei das Mikrowellensystem (80) eine Mikrowellenquelle (84) umfasst, die als Magnetron, Klystron, Gyrotron oder Festkörperquelle konfiguriert ist.

14. Baugruppe nach einem der vorhergehenden Ansprüche, ferner umfassend ein Erfassungssystem (112), das dazu konfiguriert ist, das Vorhandensein von Eis basierend auf einem erfassten Parameter, der den Mikrowellen (88) zugeordnet ist, zu erfassen.

15. Baugruppe nach einem der vorhergehenden Ansprüche, wobei:
die Gondeleinlassstruktur (22) eine Außenfläche (76) umfasst; und
das Mikrowellensystem (80) dazu konfiguriert ist, Mikrowellen (88) zum Schmelzen und/oder Verhindern von Eisansammlung auf der Außenfläche (76) auf das dielektrische Material zu richten.

## Revendications

1. Ensemble pour un système de propulsion d'aéronef, comprenant :
une structure d'entrée de nacelle (22) s'étendant circonférentiellement autour d'un axe central (16), la structure d'entrée de nacelle (22) comprenant une peau extérieure (78), et la peau extérieure (78) comprenant un matériau diélectrique (82) ; et
un système à micro-ondes (80) configuré pour diriger des micro-ondes (88) vers le matériau diélectrique (82) pour faire fondre et/ou empêcher l'accumulation de glace sur la peau extérieure (78) ; **caractérisé en ce que**
la peau extérieure (78) comprend une base (104) et une pluralité d'inserts (102) ;
dans lequel la base (104) est configurée avec une pluralité d'ouvertures (94) ;
dans lequel chacun de la pluralité d'inserts (102) bouche l'une respective de la pluralité d'ouvertures (94) ; et
dans lequel la pluralité d'inserts (102) comprend le matériau diélectrique (82).

2. Ensemble selon la revendication 1, dans lequel la peau extérieure (78) forme au moins partiellement une lèvre d'entrée (46) de la structure d'entrée de nacelle (22), et la lèvre d'entrée (46) est configurée avec le matériau diélectrique (82).

3. Ensemble selon la revendication 1 ou 2, dans lequel :
la peau extérieure (78) forme au moins partiellement une peau de lèvre intérieure (58) de la structure d'entrée de nacelle (22), et la peau de lèvre intérieure (58) est configurée avec le matériau diélectrique (82) ; et/ou
la peau extérieure (78) forme au moins partiellement une peau de lèvre extérieure (60) de la structure d'entrée de nacelle (22), et la peau de lèvre extérieure (60) est configurée avec le matériau diélectrique (82).

4. Ensemble selon une quelconque revendication précédente, dans lequel la pluralité d'inserts (102) sont agencés en une pluralité de réseaux (106).

5. Ensemble selon la revendication 4, dans lequel :
un premier de la pluralité de réseaux (106) comporte un premier ensemble de la pluralité d'inserts (102) ;
un second de la pluralité de réseaux (106) comporte un second ensemble de la pluralité d'inserts (102) ; et
le second ensemble de la pluralité d'inserts (102) est circonférentiellement décalé du premier ensemble de la pluralité d'inserts (102) autour de l'axe central (16), et/ou le second ensemble de la pluralité d'inserts (102) est décalé axialement du premier ensemble de la pluralité d'inserts (102) le long de l'axe central (16).

6. Ensemble selon une quelconque revendication précédente, dans lequel le matériau diélectrique (82) est configuré en une bande annulaire (102A).

7. Ensemble selon la revendication 6, dans lequel la bande annulaire (102A) est située en un point axialement le plus en avant de la structure d'entrée de nacelle.

8. Ensemble selon une quelconque revendication précédente, dans lequel :
la structure d'entrée de nacelle (22) est configurée avec une cavité interne (72) formée au moins partiellement par la peau extérieure (78) ;
le système à micro-ondes (80) comporte un guide d'ondes (90) à l'intérieur de la cavité interne (72) ; et
le guide d'ondes (90) est configuré pour diriger les micro-ondes (88) vers le matériau diélectrique (82).

9. Ensemble selon une quelconque revendication précédente, dans lequel les micro-ondes (88) sont émises à une fréquence comprise entre un et dix gigahertz.

10. Ensemble selon une quelconque revendication précédente, dans lequel le matériau diélectrique (82) comprend au moins l'un parmi l'alumine, la silice ou un fluoropolymère.

11. Ensemble selon une quelconque revendication précédente, dans lequel le système à micro-ondes (80) est configuré pour générer les micro-ondes (88) par impulsions.

12. Ensemble selon une quelconque revendication précédente, dans lequel :
le système à micro-ondes (80) comporte un guide d'ondes de ligne de transmission coaxial (96) ; et/ou
le système à micro-ondes (80) comporte un ou le guide d'ondes (90, 96), et ledit guide d'ondes comprend un fluoropolymère.

13. Ensemble selon une quelconque revendication précédente, dans lequel le système à micro-ondes (80) comprend une source à micro-ondes (84) configurée comme un magnétron, un klystron, un gyrotron ou une source à l'état solide.

14. Ensemble selon une quelconque revendication précédente, comprenant en outre un système de détection (112) configuré pour détecter la présence de glace sur la base d'un paramètre détecté associé aux micro-ondes (88).

15. Ensemble selon une quelconque revendication précédente, dans lequel :
la structure d'entrée de nacelle (22) comprend une surface extérieure (76) ; et
le système à micro-ondes (80) est configuré pour diriger des micro-ondes (88) vers le matériau diélectrique pour faire fondre et/ou empêcher l'accumulation de glace sur la surface extérieure (76) .
